(19) Europäisches Patentamt

European Patent Office

Office européen des brevets

(11) **EP 1 452 383 B1**

(12) **FASCICULE DE BREVET EUROPEEN**

(45) Date de publication et mention
de la délivrance du brevet:
**21.06.2006 Bulletin 2006/25**

(51) Int Cl.:
*F16H 61/66* (2006.01)    *B60K 6/02* (2006.01)
*F16H 3/72* (2006.01)

(21) Numéro de dépôt: **04364019.2**

(22) Date de dépôt: **25.02.2004**

(54) **Système de régulation mécanique du dispositif de transmission de mouvement pour un véhicule automobile**

Regelsystem für ein Kraftfahrzeuggetriebe

Regulation system for an automobile transmission

(84) Etats contractants désignés:
**AT BE BG CH CY CZ DE DK EE ES FI FR GB GR
HU IE IT LI LU MC NL PT RO SE SI SK TR**

(30) Priorité: **26.02.2003 FR 0302338**

(43) Date de publication de la demande:
**01.09.2004 Bulletin 2004/36**

(73) Titulaire: **Peugeot Citroen Automobiles S.A.
78140 Vélizy Villacoublay (FR)**

(72) Inventeurs:
• **Besnard, Sébastien A. J.
92340 Bourg la Reine (FR)**

• **Laeuffer, Jacques A.
75007 Paris (FR)**

(74) Mandataire: **Le Faou, Daniel
Cabinet Regimbeau
Espace Performance
Bâtiment K
35769 Saint-Gregoire-Cedex (FR)**

(56) Documents cités:
**EP-A- 0 830 969        EP-A- 1 275 551
WO-A2-03/024735        FR-A- 2 783 763
US-A1- 2001 017 227**

## Description

La présente invention concerne un système de régulation du dispositif de transmission de mouvement pour un véhicule automobile.

Plus précisément, elle a pour objet un système de régulation mécanique destiné à un dispositif de transmission de puissance entre, d'une part, un moteur thermique et/ou des machines électriques et, d'autre part, les roues motrices d'un véhicule automobile, le véhicule en question comportant, en plus du moteur thermique traditionnel, une paire de machines électriques. Un ensemble mécanique relie le moteur thermique et les deux machines électriques, tandis qu'un dispositif de liaison assure le passage de puissance électrique entre les deux machines électriques.

Dans une motorisation hybride de ce genre, lorsque le moteur thermique fonctionne, une partie de sa puissance peut être transmise directement, et mécaniquement, aux roues motrices du véhicule. Une autre partie peut être dérivée par la chaîne électrique constituée des deux machines électriques. Cette technique de dérivation de puissance permet de moduler la puissance transmise aux roues.

Un tel système, qui requiert normalement la présence d'une batterie à haute tension, permet également de faire fonctionner l'une des machines électriques en mode "générateur" tandis que l'autre fonctionne en mode "moteur", de sorte que, dans certaines conditions de conduite (notamment en phase de ralentissement), une puissance qui aurait normalement été perdue est récupérée par la batterie équipant le véhicule, via la machine génératrice.

Bien entendu, un calculateur pilote un circuit de commande et de contrôle des différents moteurs en fonction, d'une part, de consignes prédéterminées (cartographie) et, d'autre part, des conditions effectives de la conduite en temps réel, ces conditions étant connues de lui grâce à des capteurs appropriés aptes à mesurer différents paramètres pertinents en la matière, tels que, par exemple, la vitesse des roues motrices, la vitesse et/ou l'accélération du véhicule, le degré d'enfoncement des pédales d'accélérateur et de frein, la vitesse et le couple de sortie du moteur thermique, la vitesse et le couple de sortie de chacune des deux machines électriques. Cet énoncé n'est pas limitatif.

Les paramètres mis en oeuvre sont choisis de manière à optimiser la sécurité et le confort de conduite, tout en réduisant au maximum la consommation en carburant.

Dans ses demandes de brevet français N° 00 09461 du 19 juillet 2000 (FR-2 811 944) et N° 01 15050 (FR-2832357) du 21 novembre 2001, la demanderesse a proposé des améliorations aux dispositifs de transmission du genre mentionné plus haut.

La réalisation décrite dans la demande N° 00 09461 montre les caractéristiques du préambule de la revendication 1 et permet de s'affranchir de la présence d'une batterie à haute tension. A cet effet, un dispositif de liaison situé entre les deux machines électriques assure un passage direct de puissance d'une machine à l'autre, sans élément intermédiaire de stockage ou de déstockage d'énergie important; ce dispositif de liaison est contrôlé de telle façon que la puissance générée par l'une des deux machines électriques soit immédiatement consommée par l'autre, et pour que les deux machines électriques répondent aux besoins de la chaîne de traction.

La liaison assurant le transfert d'énergie électrique entre les deux machines électriques se fait par l'intermédiaire de deux convertisseurs statiques d'énergie sous la forme de deux onduleurs, chacun d'eux étant associé à une machine électrique. Ces deux onduleurs sont reliés l'un à l'autre par l'intermédiaire de leurs alimentations continues, connectées à un bus dont la tension entre les deux lignes doit être maintenue à une valeur constante.

Selon un mode d'exécution préféré de ce dispositif, le moteur thermique est relié aux deux machines électriques par l'intermédiaire d'un ensemble mécanique qui consiste en un train d'engrenages épicycloïdaux.

Dans la réalisation décrite dans la demande N° 01 15050, on a recours à au moins deux trains d'engrenages épicycloïdaux, qui relient le moteur thermique et les machines électriques entre eux et aux roues du véhicule.

Un dispositif de commutation mécanique, exempt d'élément dissipatif d'énergie, permet de modifier le mode de fonctionnement du dispositif de transmission en faisant transiter le mouvement par l'un et/ou l'autre des deux trains.

Un objectif de la présente invention est, tout en respectant les contraintes spécifiques d'un système de transmission du genre exposé ci-dessus, d'obtenir le meilleur compromis possible entre la consommation de carburant, qui doit être la plus réduite possible, et les performances du véhicule sur le plan du "brio", ceci en régulant le système de sorte qu'un couple optimal soit, en permanence ou presque, appliqué aux roues motrices.

On entend par le terme "brio" la rapidité d'application de couple au véhicule lors de son "décollage" (au départ) ou lors d'une reprise (pour doubler, notamment).

Une conduite en "brio" s'oppose à une situation de conduite dite "stabilisée", qui signifie que sont stables à la fois le couple à la roue et le régime du moteur thermique.

Une conduite "stabilisée" ne correspond pas, en revanche, à une conduite à vitesse constante. Une situation dans laquelle le couple à la roue évolue peu à l'horizon d'une seconde peut être qualifiée de "stabilisée", même si l'accélération du véhicule est alors maximale.

Avec un système de transmission électronique du genre exposé ci-dessus, qui ne comporte pas de surcapacité - comme du reste avec un véhicule conventionnel -, en conduite stabilisée, la puissance demandée aux pistons du moteur thermique est instantanément consommée par la roue.

En brio, les inerties des masses en mouvement du groupe motopropulseur peuvent absorber ou fournir une grande partie de la puissance.

La plupart du temps, le groupe motopropulseur est en situation stabilisée. Il s'agit alors d'optimiser la consommation. A cet effet, la puissance à la roue ($P_{roue}$) étant définie, le système de transmission choisit le rapport de réduction adéquat de sorte que le moteur thermique se situe au point de rendement optimal du système correspondant à cet état (puissance et vitesse du véhicule).

Cela conduit à un couple de sortie du moteur thermique ($C_{MTH}$) qui est fort et, corrélativement, à une vitesse de rotation ($\omega_{MTH}$) qui est faible à cette sortie.

On appelle $C_{STAB}$ le couple auquel le moteur thermique se positionne pour fournir une puissance donnée.

En reprise, la puissance à la roue ($P_{roue}$) demandée étant accrue, la puissance ($P_{MTH}$) développée par le moteur thermique doit croître également.

Par définition, $P_{MTH} + C_{MTH} . \omega_{MTH}$

Comme $C_{MTH}$ est élevé, proche de sa valeur maximale ($C_{MAX}$), il faut donc augmenter $\omega_{MTH}$.

Mais cela requiert de vaincre d'abord l'inertie du moteur thermique, donc de lui fournir de la puissance, laquelle ne peut provenir que du moteur thermique lui-même.

Si $C_{STAB} = C_{MAX}$, le moteur thermique ne pourrait s'accélérer que si on ponctionnait une partie de la puissance qu'il donnait en stabilisé à la roue, ce qui provoquerait un effacement de couple à la roue, et donc une perturbation de la transmission.

En revanche, si $C_{STAB} < C_{MAX}$, une action rapide sur l'alimentation du moteur thermique en carburant, injection ou suralimentation notamment, permettra d'obtenir rapidement la puissance supplémentaire nécessaire, de valeur égale à ($C_{MAX} - C_{STAB}$). $\omega_{MTH}$, ceci sans réduction du couple à la roue.

L'objet de l'invention est illustré par les figures 1 à 7 annexées, sur lesquelles:

La figure 1 représente très schématiquement un dispositif de transmission pour un véhicule automobile auquel est destiné le système de régulation mécanique conforme à l'invention.

La figure 2 représente un mode de réalisation possible de l'ensemble mécanique.

La figure 3 est un diagramme qui représente, en fonction du régime du moteur thermique, le couple maximal que peut délivrer ce moteur, un couple **C** stabilisé permettant de minimiser la consommation du véhicule, ainsi qu'une courbe d'isopuissance.

Les figures 4 et 5 sont des schémas fonctionnels de deux modes de réalisation particuliers du système.

Les figures 6 et 7 sont des diagrammes similaires à celui de la figure 3, destinés à montrer l'évolution du point de fonctionnement du moteur thermique, avec les modes de réalisation des figures 4 et 5, respectivement.

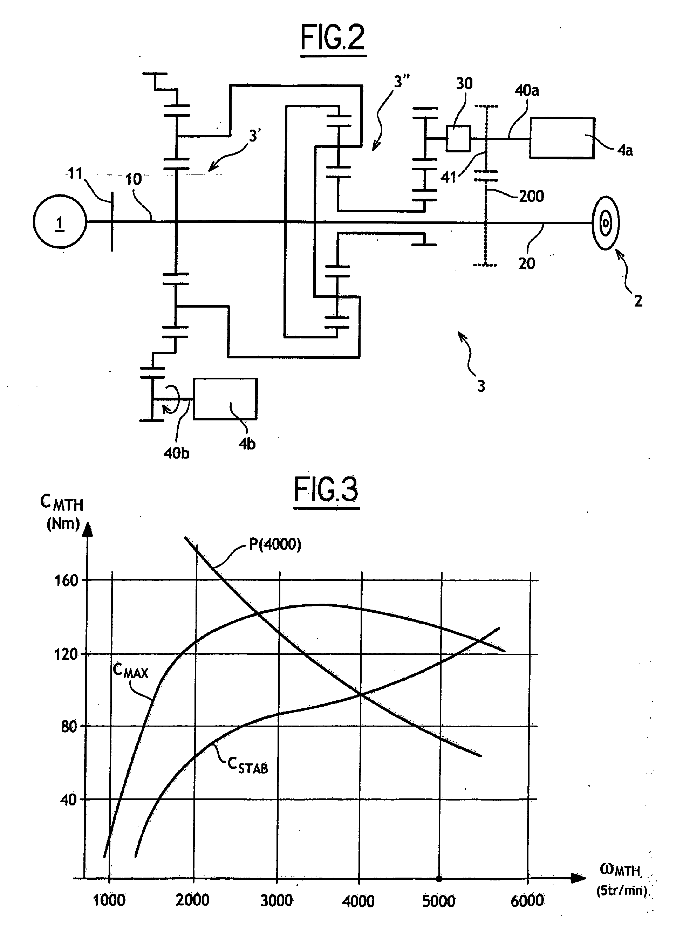

Pour bien comprendre le principe de l'invention, on se référera à la figure 3 des dessins annexés, qui représente un repère orthogonal dont l'axe d'abscisse correspond à une vitesse de rotation $\omega$ (en tours par minute) et l'axe des ordonnées à un couple $C$ (en Newton .mètres).

D'une façon générale, pour que le moteur thermique fournisse une puissance donnée, une infinité de points de fonctionnement sont possibles dans ce repère.

La stratégie à la base de l'invention consiste à placer ce point, dès que cela est possible, sur une courbe "$C_{STAB}$" correspondant à une conduite stabilisée. Cette valeur optimale est définie par une cartographie couple/vitesse du moteur thermique.

La courbe "$C_{MAX}$" correspond au couple maximal possible du moteur thermique..

De préférence, dans la gamme des vitesses rencontrées en roulage normal (de l'ordre de 3000 à 4000 tr/mn), la valeur de $C_{STAB}$ est inférieure de 30 % environ à celle de $C_{MAX}$.

On dispose ainsi d'une bonne combinaison des rendements optimaux du moteur thermique (faible consommation) avec une reprise dynamique (brio).

Les pertes dans la transmission électrique, quant à elles, sont faibles.

La courbe **P** (4000) est une courbe le long de laquelle la puissance est constante. Il existe bien entendu une infinité de courbes similaires. La courbe représentée est celle qui coupe la courbe "$C_{STAB}$" au régime de 4000 tr/mn, cette valeur étant choisie afin d'illustrer ultérieurement le fonctionnement de l'invention.

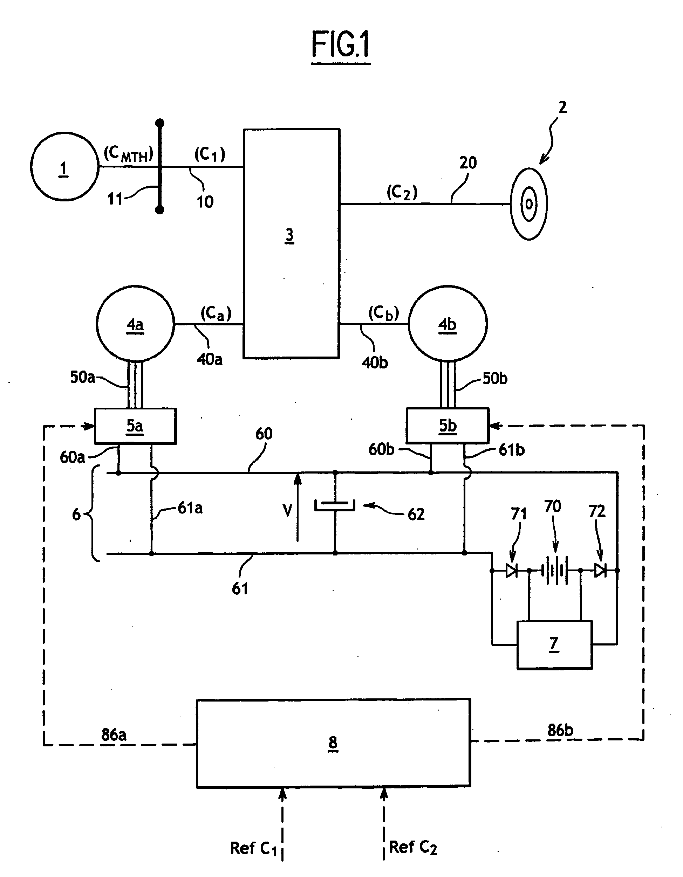

Comme on le voit sur la figure 1, le véhicule comporte un moteur thermique 1, des roues motrices 2, et une paire de machines électriques 4a, 4b.

Le moteur thermique 1 et les deux machines électriques 4a et 4b sont reliés entre eux par l'intermédiaire d'un ensemble mécanique 3.

Ce dernier peut notamment être composé de deux trains d'engrenages épicycloïdaux associés à un dispositif de commutation mécanique, comme exposé dans la demande N° 01 15050 précitée, à laquelle on pourra se reporter au besoin, aussi bien pour ce qui est de sa structure que de son fonctionnement.

Néanmoins, un mode d'exécution possible d'un tel ensemble mécanique 3, dont les trains d'engrenages épicycloïdaux sont référencés 3' et 3", est schématiquement illustré sur la figure 2.

Le moteur thermique 1 et les deux machines électriques 4a et 4b sont reliés à l'ensemble mécanique 3 par l'intermédiaire de leur arbre de sortie respectif 10, 40a et 40b.

L'arbre 10 porte un volant d'inertie 11.

$C_{MTH}$ est le couple disponible directement en sortie du moteur thermique, en amont du volant d'inertie 11, tandis qu'on a désigné par **C**1 le couple fourni à l'ensemble mécanique 3, en aval dudit volant.

On a désigné par la référence **C**2 le couple de sortie de l'ensemble mécanique 3.

L'arbre de sortie 20 de l'ensemble mécanique 3 commande les roues motrices 2.

Chaque machine électrique 4a, 4b peut indifféremment fonctionner comme générateur de courant (lorsqu'elle est entraînée en rotation par l'arbre associé 40) ou comme moteur (lorsqu'on lui fournit une puissance électrique).

Ces machines électriques sont des machines synchrones à courant alternatif, dont l'intérêt est d'être très compactes et de présenter un bon rendement. Leur vitesse de rotation est proportionnelle à la fréquence du courant.

Elles sont montées en parallèle et alimentées chacune par un convertisseur de courant continu/alternatif sous la forme d'un onduleur 5a, respectivement 5b.

On a désigné par **C**a et **C**b les valeurs des couples délivrés respectivement par chacune des deux machines électriques 4a, 4b, et par ωa et ωb les vitesses de rotation de chacune de ces machines, respectivement.

Les deux onduleurs 5a et 5b sont reliés entre eux, par l'intermédiaire de leurs lignes d'alimentation continue 60a-61a et 60b-61b à un bus 6 dont les deux lignes portent les références 60 et 61.

Comme dans le dispositif de la demande N° 00 09461, à laquelle on pourra se reporter au besoin, ce dispositif de liaison ne comporte aucune batterie de puissance.

Ainsi, la somme des deux puissances électriques continues des deux onduleurs 5a et 5b doit être nulle ou encore, toute puissance électrique générée par l'un des onduleurs et fournie au bus 6 doit être immédiatement consommée par l'autre onduleur.

Ceci se traduit par le fait que la tension entre les lignes 60 et 61 du bus doit être maintenue à une valeur **V** constante, par exemple égale à 400 volts. Cette valeur est la valeur nominale de travail pour un ensemble formé d'un onduleur et d'une machine électrique qui est particulièrement adapté à cette application.

Un condensateur 62 intercalé entre les deux onduleurs 61a, 61b et connecté aux lignes 60 et 61 permet d'assurer un petit stockage d'énergie entre les deux onduleurs, nécessaire à leur fonctionnement.

Ce condensateur 62 peut notamment être du type électrochimique, diélectrique film ou céramique.

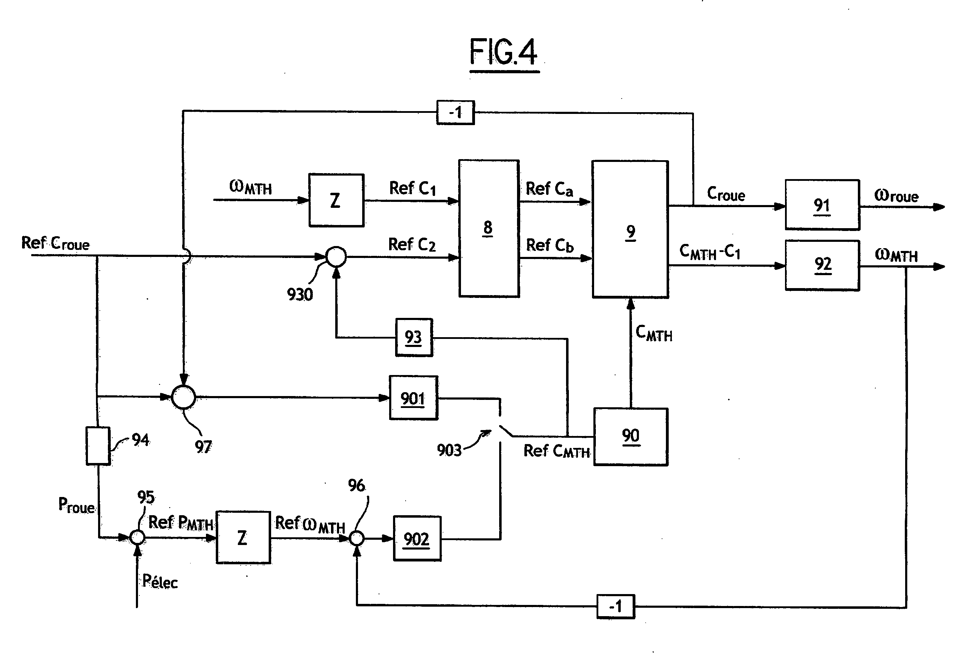

De préférence, comme prévu dans le mode de réalisation illustré à la figure 4 de ladite demande antérieure, le bus 6 est connecté à un convertisseur haute tension - basse tension 7 associé à la batterie de service, de tension beaucoup plus faible, par exemple de 42 volts. Le convertisseur 7 assure le chargement de la batterie.

Cette batterie est protégée de la haute tension par des diodes 71-72.

Elle permet de faire démarrer le moteur thermique 1 par le pilotage d'une machine électrique, permettant ainsi de se passer d'un démarreur.

Un dispositif de commande et de contrôle 8, pourvu d'un calculateur, permet d'agir sur chacun des onduleurs 5a, 5b, via des liaisons de commande 86a, 86b, représentées en traits interrompus fléchés sur la figure 1.

On appellera ce dispositif 8 "module de régulation électrique ".

Ses actions consistent à imposer à la machine 4a, 4b associée à l'onduleur des valeurs données du couple délivré et de la vitesse de rotation; ces paramètres sont fonctions, respectivement, de l'intensité et de la fréquence du courant alternatif fourni à la machine par l'onduleur.

Le module de régulation électrique réagit et agit en fonction d'instructions d'entrée correspondant à des valeurs déterminées des couples **C**1 et **C**2, valeurs de référence désignées Ref **C**1 et Ref **C**2, comme cela sera expliqué plus loin.

Comme expliqué dans la demande antérieure N° 01 15050 précitée, le dispositif de transmission permet, par l'intermédiaire d'un organe de commutation ad hoc, de relier l'une des deux machines électriques, soit directement aux roues du véhicule (selon un premier mode de fonctionnement), soit au planétaire d'un des deux trains épicycloïdaux (selon un second mode de fonctionnement).

En référence à la figure 2 de la présente demande, sur laquelle l'organe de commutation porte la référence 30, c'est la machine électrique 4a qui peut être reliée sélectivement, soit à l'arbre de roue 20 (via un jeu de pignons 41-200 représentés en traits interrompus), soit au planétaire de l'un (3") des deux trains épicycloïdaux, l'autre machine 4b étant reliée au train 3'.

Typiquement, le premier mode de fonctionnement est mis en oeuvre pour des rapports de transmission faibles (compris par exemple entre 0 et 15 km/h à un régime de 1000 tr/mn), notamment pour le démarrage du véhicule.

Le second mode de fonctionnement est utilisé pour des rapports de transmission relativement longs (compris par exemple entre 15 et 60 km/h à un régime de 1000 tr/mn), en marche avant et après démarrage.

Chacun de ces modes correspond à des équations données, dont les coefficients numériques sont des valeurs particulières dépendant des démultiplications et des inerties des différents organes.

Ces équations permettent de définir les valeurs de **C**1 et **C**2.

Par ailleurs, le bilan électrique est défini par l'équation $\mathbf{P}_{élec} + \mathbf{C}_a.\omega_a \, \mathbf{C}_b.\omega_b = 0$, dans laquelle $\mathbf{P}_{élec}$ correspond aux pertes dans les machines électriques et à la puissance prélevée par le convertisseur 7.

L'objectif de l'invention, exposé plus haut, partant de ces équations, est atteint, lorsque sont remplis les deux impératifs ci-après:

$$C1 \leq \text{Ref } C1 = C_{STAB}$$

$$C_{ROUE} = C2 \leq \text{Ref. } C2$$

$\mathbf{C}_{ROUE}$ étant la valeur du couple sur l'arbre de roue.

Le principe est que $\mathbf{C}1$ ne doit pas dépasser $\mathbf{C}_{STAB}$ car, d'une part, il ne faut pas étouffer le moteur thermique et, d'autre part, on ne peut pas faire varier rapidement $\mathbf{C}1$ pour réguler la vitesse du moteur ($\omega_{MTH}$), car cela perturbe $\mathbf{C}2$.

Ainsi, Ref $\mathbf{C}1$ ne doit pas être dépassée pour ne pas étouffer le moteur thermique. Ref $\mathbf{C}2$ ne doit pas être dépassée pour ne pas emballer le véhicule.

La demande Ref $\mathbf{C}2$, si elle est immédiatement satisfaite, induit une valeur de $\mathbf{C}1$ donnée, du fait de la contrainte de l'équilibre du bilan électrique. Il s'agit alors de modifier progressivement la vitesse du moteur ($\omega_{MTH}$) de façon à atteindre $\mathbf{C}1 = \mathbf{C}_{STAB}$.

La demande Ref $\mathbf{C}2$, si elle est n'est pas immédiatement satisfaite, ne l'est pas parce que la valeur de $\mathbf{C}1$ est limitée à $C_{STAB}$.

L'objet de l'invention est donc un système de régulation mécanique d'un dispositif de transmission de puissance entre, d'une part, un moteur thermique pourvu d'un volant d'inertie et une paire de machines électriques équipant un véhicule automobile et, d'autre part, ses roues motrices, le moteur thermique étant relié aux deux machines électriques par l'intermédiaire d'un ensemble mécanique, par exemple à deux trains d'engrenage épicycloïdaux, tandis qu'un dispositif de liaison électrique situé entre les deux machines électriques assure un passage direct de puissance d'une machine à l'autre, sans élément intermédiaire de stockage ou de déstockage d'énergie important, ce dispositif de liaison étant contrôlé de telle façon que la puissance générée par l'une des deux machines électriques soit immédiatement consommée par l'autre, et pour que les deux machines électriques répondent aux besoins de la chaîne de traction, la liaison assurant le transfert d'énergie électrique entre les deux machines électriques se faisant par l'intermédiaire de deux onduleurs, chacun d'eux étant associé à une machine électrique, ces deux onduleurs étant connectés à un bus dont les deux lignes sont reliées par un condensateur, un dispositif dit "module de régulation électrique" étant adapté pour imposer à chacune desdites machines électriques des valeurs données de couple $\mathbf{C}a$, respectivement $\mathbf{C}b$.

Ce système est remarquable en ce que, $\mathbf{C}1$ et $\mathbf{C}2$ étant respectivement les valeurs des couples effectivement développés en sortie du moteur thermique, en aval du volant d'inertie et en sortie dudit ensemble mécanique, côté roues motrices, on rentre comme consignes dans ledit module de régulation électrique les valeurs de référence souhaitées pour chacun de ces couples, désignés Ref $\mathbf{C}1$ et, respectivement, Ref $\mathbf{C}2$, à partir desquelles le module de régulation électrique va réguler les couples $\mathbf{C}a$ et $\mathbf{C}b$.

Dans un mode de réalisation avantageux de ce système, celui-ci comporte un circuit de commande et une chaîne de transmission de puissance qui sont adaptés pour générer les valeurs de consigne Ref $\mathbf{C}1$ et Ref $\mathbf{C}2$, pour que soient en permanences respectées les conditions suivantes:

$$C1 \leq \text{Ref } C1 = C_{STAB}$$

$$C_{ROUE} = C2 \leq \text{Ref. } C2,$$

"$\mathbf{C}_{ROUE}$" étant la valeur du couple mesuré ou estimé sur l'arbre de roue, tandis que "$\mathbf{C}_{STAB}$" est la valeur du couple du moteur thermique correspondant à une conduite dite "stabilisée".

De préférence, celle-ci est définie par une cartographie couple/vitesse du moteur thermique.

Selon un premier mode de réalisation possible de ce système, celui-ci comporte un circuit comprenant deux boucles de pilotage d'un calculateur de commande du couple $\mathbf{C}_{MTH}$ du moteur thermique, à savoir une première boucle qui prélève l'information $\mathbf{C}_{ROUE}$ à la sortie de ladite chaîne de transmission de puissance et la compare avec la valeur de Ref $\mathbf{C}_{ROUE}$ au moyen d'un premier et une seconde boucle qui prélève l'information $\omega_{MTH}$ à la sortie d'une fonction de transfert placée en aval de ladite chaîne de transmission de puissance et la compare avec la valeur de Ref $\omega_{MTH}$ au moyen d'un second comparateur, ces premier et second comparateurs étant reliés, chacun par l'intermédiaire d'un correcteur, à un même commutateur, lequel est connecté à l'entrée dudit calculateur.

Selon un second mode de réalisation possible de ce système, celui-ci comporte un circuit comprenant deux boucles qui prélèvent l'information $\omega_{MTH}$ à la sortie d'une fonction de transfert placée en aval de ladite chaîne de transmission de puissance, à savoir une première boucle adaptée pour comparer cette information avec la valeur de Ref $\omega_{MTH}$ au moyen d'un premier comparateur, et pour en déduire via un correcteur, la valeur Ref **C**1 et pour la rentrer dans ledit module de régulation électrique, et une seconde boucle adaptée pour adresser l'information $\omega_{MTH}$ à un diviseur qui reçoit également comme information la valeur de référence de puissance Ref **P**$_{MTH}$ demandée au moteur thermique, de manière à délivrer une valeur de consigne correcte Ref **C**$_{MTH}$ pour le couple du moteur thermique, et pour l'adresser à un calculateur de commande du couple **C**$_{MTH}$ du moteur thermique.

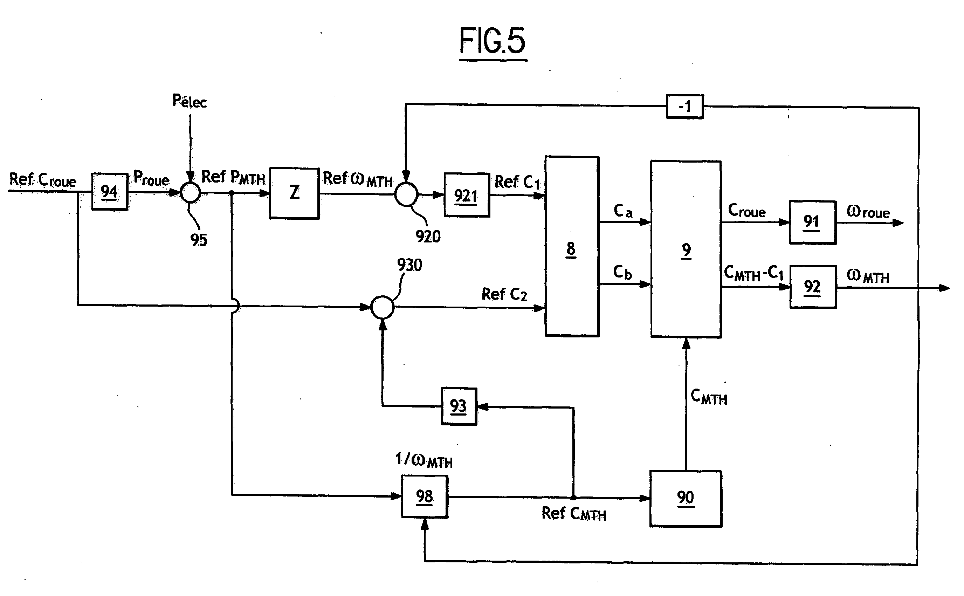

Comme indiqué plus haut, les figures 4 et 5 sont des schémas fonctionnels montrant deux circuits de commande possibles, susceptibles d'être utilisés pour la mise en oeuvre de l'invention.

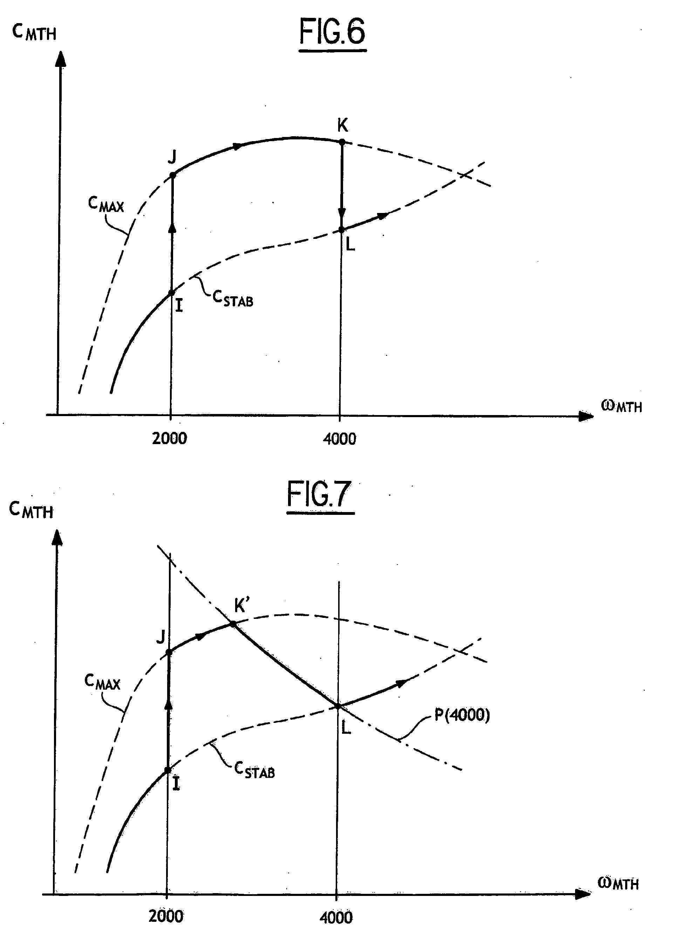

Les figures 6 et 7 sont des schémas similaires à celui de la figure 3 qui illustrent deux cheminements possibles dans le repère **C**$_{MTH}$ ($\omega_{MTH}$), selon que la régulation est faite à l'aide du circuit de la figure 4 ou, respectivement, de celui de la figure 5.

Comme cela va maintenant être expliqué en référence à la figure 4, le module 8 reçoit des instructions de l'extérieur, par des lignes d'entrée Ref **C**1 et Ref **C**2.

Ref **C**1 est fournie par un module **Z,** de cartographie, qui définit la valeur du couple du moteur thermique en conduite "stabilisée" en fonction de la valeur réelle de la vitesse du moteur thermique $\omega_{MTH}$.

Ref **C**2 est fournie d'une manière qui sera expliquée plus loin.

Le rectangle 9 symbolise une fonction de transfert de puissance de la transmission (déterminée par des équations). Ses entrées, au nombre de trois, reçoivent les valeurs réelles de **C**a et **C**b, après régulation par le module 8, ainsi que la valeur du couple de sortie du moteur thermique (**C**$_{MTH}$), qui lui est donnée par un module dynamique d'admission moteur 90. Ce dernier est un calculateur de commande en couple du moteur thermique.

La fonction de transfert de puissance 9 est adaptée pour fournir les valeurs de **C**$_{ROUE}$ et de [**C**$_{MTH}$ - **C**1].

Une deuxième fonction de transfert 91, comportant notamment un intégrateur, détermine à partir de **C**$_{ROUE}$ (en tenant compte de l'inertie du véhicule) la valeur de $\omega_{ROUE}$.

La valeur de **C**$_{ROUE}$ est adressée à un comparateur 97.

Une troisième fonction de transfert 92 détermine à partir de [**C**$_{MTH}$ - **C**1] (en tenant compte de l'inertie du moteur thermique) la valeur de $\omega_{MTH}$.

On mesure ainsi le régime actuel du moteur thermique. Cette valeur est adressée à un comparateur 96.

La consigne de couple à la roue Ref **C**$_{ROUE}$, qui est fonction de l'angle d'enfoncement de la pédale d'accélérateur, est adressée à la fois au comparateur 97 précité, à un comparateur 930 dont le rôle sera expliqué plus loin, et à un multiplicateur 94. Ce dernier fournit une valeur de puissance à la roue qui est le produit de Ref **C**$_{ROUE}$ par $\omega_{ROUE}$.

Au moyen d'un opérateur additionneur 95, on y ajoute la puissance électrique **P**$_{élec}$, et on obtient la valeur de référence de puissance demandée au moteur thermique Ref **P**$_{MTH}$.

Cette valeur est adressée au module **Z** de cartographie, et traitée par lui. Il en sort la valeur de régime demandée au moteur thermique, Ref $\omega_{MTH}$, qui est adressée au comparateur 96 dont il a été fait état plus haut.

En cas d'écart avec le régime actuel $\omega_{MTH}$, une consigne d'action sur **C**2 est envoyée, via un correcteur de commande 902, à une liaison à commutateur 903, dont le rôle sera explicité plus loin.

Le comparateur 97 a pour fonction de comparer les valeurs de Ref **C**$_{ROUE}$ et de **C**$_{ROUE}$. En cas d'écart, une consigne d'action sur **C**1 est envoyée, via un correcteur de commande 901 à la liaison à commutateur 903.

Ainsi le module 90 reçoit en permanence une valeur de référence correcte pour **C**$_{MTH}$, sélectivement, du correcteur 901 ou 902, par l'intermédiaire du commutateur 903.

Ref **C**$_{MTH}$ est adressée via un gain 93 à un sommateur 930. Celui-ci additionne Ref **C**$_{ROUE}$ à la valeur reçue du gain 93, et en déduit la valeur de Ref **C**2, pour l'envoyer au module de régulation électrique 8.

En pratique, les deux références **C**1 et **C**2 sont envoyées à la régulation électrique.

Cette régulation peut se trouver dans deux états. Tant que la régulation peut rester dans l'état d'avant, elle y reste.

Dans un premier état (Commande **C**1), on essaie de réaliser la référence **C**1 par le moyen de la régulation électrique.

Dans ce cas, Ref **C**$_{MTH}$ est utilisée pour réguler **C**$_{ROUE}$. Dans ce but, le commutateur 903 relie alors 901 à 90.

En combinant avec Ref [**C**$_a.\omega_a$ + **C**$_b.\omega_b$], on en tire les valeurs Ref **C**a et Ref **C**b, d'où une valeur de **C**2.

Si |ref **C**a|> **C**a$_{MAX}$, on sature cette référence à son maximum, et on recalcule Ref **C**b en respectant toujours la contrainte de Ref [**C**$_a.\omega_a$ + **C**$_b.\omega_b$]. Dans ce cas, **C**1 sera inférieure à la référence désirée.

Si |Ref **C**b| > **C**b $_{MAX}$, on sature cette référence à son maximum, et on recalcule Ref **C**a en respectant toujours la contrainte de Ref **C**$_a.\omega_a$ + **C**$_b.\omega_b$]. Dans ce cas, **C**1 sera inférieure à la référence désirée.

Si **C**2 > Ref **C**2, cela va à l'encontre de ce qui est désiré. On y renonce donc et on passe en commande **C**2.

Dans un second état, correspondant à cette commande **C**2, on essaie de réaliser la référence **C**2 par le moyen de la régulation électrique. Dans ce cas, Ref $C_{MTH}$ est utilisée pour réguler $\omega_{MTH}$. Dans ce but, le commutateur 903 relie alors 902 à 90.

En combinant cette Ref $C2$ avec Ref $[C_a.\omega_a + C_b.\omega_b]$, on en tire les valeurs Ref $C$a et Ref $C$b, et donc également une valeur de C1.

Si $|\text{Ref } C\text{a}| > Ca_{MAX}$, on sature cette référence à son maximum, et on recalcule Ref $C$b en respectant toujours la contrainte de Ref $[C_a.\omega_a + C_b.\omega_b]$. Dans ce cas, $C2$ sera inférieure à la référence désirée.

Si $|\text{Ref } C\text{b}| > C\text{b }_{MAX}$, on sature cette référence à son maximum, et on recalcule Ref $C$a en respectant toujours la contrainte de Ref $[C_a.\omega_a + C_b.\omega_b]$. Dans ce cas, $C2$ sera inférieure à la référence désirée.

Si $C1 > \text{Ref } C1$, cela va à l'encontre de ce qui est désiré. On y renonce donc et on passe en commande $C1$.

Un tel circuit permet d'obtenir une conduite telle qu'illustré sur la figure 6.

La montée en régime et la conduite ordinaire se font idéalement le long de la courbe $C_{STAB}$, incorporée dans le module de cartographie $Z$.

Cette conduite correspond en effet à une consommation en carburant réduite.

Dans l'exemple illustré, il est supposé qu'au cours de cette conduite stabilisée, alors que le régime du moteur thermique est de 2000 tr/mn (point $I$), le conducteur souhaite faire une reprise, notamment pour doubler un autre véhicule. Elle doit se faire avec brio. Pour cela, grâce à l'invention, on monte tout d'abord très rapidement en couple, sans modification du régime, jusqu'à atteindre la courbe $C_{MAX}$, qui par définition ne peut être dépassée (point $J$).

C'est cette courbe qui est alors suivie, tandis que le régime augmente, ce qui permet de doubler dans de bonnes conditions.

On suppose que la demande en régime est de 4000 tr/mn.

Lorsqu'on arrive à ce régime (point $K$), le couple diminue avec $\omega_{MTH}$ à valeur constante, jusqu'à retrouver la courbe $C_{STAB}$ (point $L$).

On peut expliquer cela de la manière suivante.

Avant le début de la reprise, on est "en stabilisé", avec $C_{MTH} = C_{STAB}$. On est en commande $C2$ (Ref $C2$ réalisée). La stabilité du moteur thermique est assurée par le régulateur 902.

Pendant le début de la reprise, on parcourt le trajet entre les points $I, J, K$ et $L$. On est en "brio", et donc $C_{MTH} > C_{STAB}$. On est en commande $C1$ (Ref $C1$ réalisée). 903 relie 901 à 90. La référence $C1$ est directement réalisée par la régulation électrique. La différence positive entre $C_{MAX}$ et $C_{STAB}$ permet d'accélérer le volant d'inertie 11. La limitation de $C1$ à la valeur $C_{STAB}$ ne permet pas d'appliquer actuellement à la roue la référence $C_{ROUE}$ souhaitée. Il en résulte une différence importante entre Ref $C_{ROUE}$ et $C_{ROUE}$. Cette différence est amplifiée par le correcteur 901 pour appliquer la Ref $C_{MTH}$ maximale possible au moteur thermique.

Quand le point $K$ est atteint, la référence $C_{ROUE}$ est réalisée, ce qui fait repasser en commande $C2$. Si le système ne repassait pas en commande $C2$, cela voudrait dire que $C_{ROUE}$ dépasserait Ref $C_{ROUE}$. Le correcteur 902 entre à nouveau en action pour maintenir le moteur thermique à son nouveau régime. Comme il n'y a plus besoin de fournir de l'énergie au volant d'inertie 11, on peut réduire $C_{MTH}$ de $C_{MAX}$ à $C_{STAB}$, ce qui place le moteur thermique au point $L$. Le point $L$ est son nouveau point de consommation maximale correspondant à la nouvelle puissance demandée à la roue.

A titre indicatif, la durée des phases allant de $I$ à $J$ et de $K$ à $L$ est quasi-instantanée, de l'ordre de 50 millisecondes chacune; celle de la phase $J$ à $K$ est de l'ordre de 500 millisecondes (0,5 s).

Le circuit représenté sur la figure 5 est plus simple que celui qui vient d'être décrit, en référence à la figure 4. Il évite les commutations.

Sur cette figure, les composants ayant des fonctions identiques ou similaires à ceux des composants de la figure 4 ont été affectés des mêmes références numériques ou littérales.

Les références 920 et 921 y désignent respectivement un comparateur et un correcteur dont la fonction est de minimiser l'écart entre Ref $\omega_{MTH}$ et $\omega_{MTH}$.

La référence 98 désigne un opérateur diviseur $1/\omega_{MTH}$.

Un tel circuit permet d'obtenir une conduite telle qu'illustré sur la figure 7.

La montée en régime et la conduite ordinaire se font idéalement le long de la courbe $C_{STAB}$, qui correspond à une consommation en carburant réduite.

Dans l'exemple illustré, il est supposé qu'au cours de cette conduite stabilisée, alors que le régime du moteur thermique est de 2000 tr/mn (point $I$), le conducteur souhaite faire une reprise, notamment pour doubler un autre véhicule. Elle doit se faire avec brio. Pour cela, grâce à l'invention, on monte tout d'abord très rapidement en couple, sans modification du régime, jusqu'à atteindre la courbe $C_{MAX}$, qui par définition ne peut être dépassée (point $J$).

C'est cette courbe qui est alors suivie, tandis que le régime augmente, ce qui permet de doubler dans de bonnes conditions.

On suppose que la demande en régime est de 4000 tr/mn.

Lorsqu'on arrive au point d'intersection de la courbe $C_{MAX}$ avec la courbe de puissance constante $P(4000)$, à ce régime (point $K'$), c'est cette courbe qui est suivie, jusqu'à retrouver la courbe $C_{STAB}$ (point $L$).

On peut expliquer cela de la manière suivante.

Le correcteur 921 a pour rôle de réguler le régime du moteur thermique. En effet, si son régime est insuffisant par rapport à la consigne, il réduit Ref **C**1 de son couple de charge pour lui permettre d'augmenter le régime.

Avant le début de la reprise, on est "en stabilisé", avec $C_{MTH} = C_{STAB}$. On est en commande **C**2 (Ref **C**2 réalisée). La Ref $C_{ROUE}$ est directement réalisée par la régulation électrique. La Ref $C_{MTH}$ résulte de la Ref $P_{MTH}$ requise, via le diviseur 98.

Pendant le début de la reprise, on parcourt le trajet entre les points **I, J, K'** et **L**. On est en "brio", et donc $C_{MTH}$ > $C_{STAB}$. On est en commande **C**1 (Ref **C**1 réalisée). La référence **C**1 est réalisée par la régulation électrique. La différence positive entre $C_{MAX}$ et $C_{STAB}$ permet d'accélérer le volant d'inertie 11. La limitation de **C**1 à la valeur $C_{STAB}$ ne permet pas d'appliquer actuellement à la roue la référence $C_{ROUE}$ souhaitée. Entre les points **J** et **K',** la Ref $C_{MTH}$ dépasse les possibilités du moteur thermique; elle est donc écrêtée à $C_{MAX}$. Entre les points **K'** et **L,** la Ref $C_{MTH}$ est effectivement réalisée.

Quand le point **L** est atteint, on repasse en commande **C**2.

Lorsqu'on arrive au point d'intersection de la courbe $C_{MAX}$ avec la courbe de puissance constante **P**(4000) à ce régime (point **K'**), c'est cette courbe qui est suivie, jusqu'à retrouver la courbe $C_{STAB}$ (point **L**).

A titre indicatif, la durée de la phase allant de **I** à **J** est quasi-instantanée, de l'ordre de 50 millisecondes ; celles des phases **J** à **K'** et **K'** à **L** sont de l'ordre de 500 millisecondes (0,5 s) chacune.

Il convient de signaler que les cartographies **Z** mises en oeuvre dans les deux modes de réalisation décrits n'ont pas les mêmes modes d'utilisation.

La première (figure 4) définit Ref **C**1 = $C_{STAB}$ en fonction du régime actuel $\omega_{MTH}$.

La seconde (figure 5) indique l'objectif de $\omega_{MTH}$ à atteindre en fonction de la puissance du moteur thermique qui est requise à la roue.

## Revendications

**1.** Système de régulation mécanique d'un dispositif de transmission de puissance entre, d'une part, le moteur thermique (1) pourvu d'un volant d'inertie (11) et une paire de machines électriques (4a, 4b) équipant un véhicule automobile et, d'autre part, ses roues motrices (2), le moteur thermique (1) étant relié aux deux machines électriques (4a, 4b) par l'intermédiaire d'un ensemble mécanique (3), tandis qu'un dispositif de liaison électrique (6, 60a ; 61a-60b ; 61b, 5a-5b ; 50a-50b) situé entre les deux machines électriques assure un passage direct de puissance d'une machine à l'autre, sans élément intermédiaire de stockage ou de déstockage d'énergie important, ce dispositif de liaison (6, 60a ; 61a-60b ; 61b, 5a-5b ; 50a-50b) étant contrôlé de telle façon que la puissance générée par l'une (4a ; 4b) des deux machines électriques soit immédiatement consommée par l'autre (4b ; 4a), et pour que les deux machines électriques (4a, 4b) répondent aux besoins de la chaîne de traction, la liaison assurant le transfert d'énergie électrique entre les deux machines électriques se faisant par l'intermédiaire de deux onduleurs (5a, 5b), chacun d'eux étant associé à une machine électrique (4a, 4b), ces deux onduleurs étant connectés à un bus (6) dont les deux lignes sont reliées par un condensateur (62), un dispositif (8) dit "module de régulation électrique" étant adapté pour imposer à chacune desdites machines électriques (4a, 4b) des valeurs données de couple **C**a, respectivement **C**b, **caractérisé par le fait que**, **C**1 et **C**2 étant respectivement les valeurs des couples effectivement développés en sortie du moteur thermique, en aval dudit volant d'inertie (11) et en sortie dudit ensemble mécanique (3), côté roues motrices (2), on rentre comme consignes dans ledit module de régulation électrique (8) les valeurs de référence souhaitées pour chacun de ces couples, désignés Ref **C**1 et, respectivement, Ref **C**2, à partir desquelles le module de régulation électrique va réguler les couples **C**a et **C**b.

**2.** Système de régulation mécanique selon la revendication 1, **caractérisé par le fait qu'**il comporte un circuit de commande (8) et une chaîne de transmission de puissance (9) adaptés pour générer lesdites valeurs de consigne Ref **C**1 et Ref **C**2, pour que soient en permanences respectées les conditions suivantes: **C**1 ≤ Ref **C**1 = $C_{STAB}$ et $C_{ROUE}$ = **C**2 ≤ Ref. **C**2, "$C_{ROUE}$" étant la valeur du couple mesuré ou estimé sur l'arbre de roue, tandis que "$C_{STAB}$" est la valeur du couple du moteur thermique (1) correspondant à une conduite dite "stabilisée".

**3.** Système de régulation mécanique selon la revendication 2, **caractérisé par le fait qu'**il comporte un circuit comprenant deux boucles de pilotage d'un calculateur (90) de commande du couple $C_{MTH}$ du moteur thermique, à savoir une première boucle qui prélève l'information $C_{ROUE}$ à la sortie de ladite chaîne de transmission de puissance (9) et la compare avec la valeur de Ref $C_{ROUE}$ au moyen d'un premier comparateur (97) et une seconde boucle qui prélève l'information $\omega_{MTH}$ à la sortie d'une fonction de transfert (92) placée en aval de ladite chaîne de transmission de puissance (9) et la compare avec la valeur de Ref $\omega_{MTH}$ au moyen d'un second comparateur (96), ces premier et second comparateurs (97, 96) étant reliés, chacun par l'intermédiaire d'un correcteur (901, respectivement 902) à un même commutateur (903), lequel est connecté à l'entrée dudit calculateur (90).

4. Système de régulation mécanique selon la revendication 2, **caractérisé par le fait qu'**il comporte un circuit comprenant deux boucles qui prélèvent l'information $\omega_{MTH}$ à la sortie d'une fonction de transfert (92) placée en aval de ladite chaîne de transmission de puissance (9), à savoir une première boucle adaptée pour comparer cette information avec la valeur de Ref $\omega_{MTH}$ au moyen d'un premier comparateur (920), et pour en déduire via un correcteur (921), la valeur Ref **C**1 et pour la rentrer dans ledit module de régulation électrique (8), et une seconde boucle adaptée pour adresser l'information $\omega_{MTH}$ à un diviseur (98) qui reçoit également comme information la valeur de référence de puissance Ref $\mathbf{P}_{MTH}$ demandée au moteur thermique, de manière à délivrer une valeur de consigne correcte Ref $\mathbf{C}_{MTH}$ pour le couple du moteur thermique, et pour l'adresser à un calculateur (90) de commande du couple $\mathbf{C}_{MTH}$ du moteur thermique.

5. Système de régulation mécanique selon l'une des revendications 1 à 4, **caractérisé par le fait que** ladite valeur du couple du moteur thermique (1) correspondant à une conduite dite "stabilisée" est définie par une cartographie couple/vitesse du moteur thermique (1).

**Claims**

1. A mechanical regulator system for a power transmission between firstly a motor vehicle engine (1) provided with a flywheel (11) and with a pair of electric machines (4a, 4b) and secondly the vehicle drive wheels (2), the engine (1) being connected to the two electric machines (4a, 4b) via a mechanical unit (3), while an electrical connection circuit (6, 60a; 61a-60b; 61b, 5a-5b; 50a-50b) situated between the two electric machines allows power to pass directly from one machine to the other without any intermediate element for significant storage or restitution of energy, said connection circuit (6, 60a; 61a-60b; 61b, 5a-5b; 50a-50b) being controlled in such a manner that the power generated by one of the two electric machines (4a; 4b) is consumed immediately by the other machine (4b; 4a), and to ensure that both electric machines (4a, 4b) satisfy the needs of the traction system, the connection for transferring electrical energy between the two electric machines takes place via two inverters (5a, 5b), each of them being associated with a respective electric machine (4a, 4b), said two inverters being connected to a bus (6) comprising two lines that are interconnected by a capacitor (62), a circuit (8) known as an "electrical regulation module" being adapted to impose on each of the said electric machines (4a, 4b) respective given torque values Ca and Cb, the system being **characterized by** the fact that for C1 and C2 being respectively the values of the torques actually developed at the outlet from the engine, downstream from said flywheel (11) and at the outlets from said mechanical unit (3) to the drive wheels (2), the reference values desired for each of these torques, respectively referenced Ref C1 and Ref C2, are input as reference values into said electrical regulation module (8), on the basis of which the electrical regulation module regulates the torques Ca and Cb.

2. A mechanical regulator system according to claim 1, **characterized by** the fact that it includes a control circuit (8) and a power transmission (9) adapted to generate said reference values Ref C1 and Ref C2 so that the following conditions are complied with continuously:

$$C1 \leq \text{Ref } C1 = C_{STAB} \text{ and } C_{WHEEL} = C2 \leq \text{Ref } C2$$

where "$C_{WHEEL}$" is the measured or estimated value of the torque on the wheel shaft, while "$C_{STAB}$" is the engine torque value corresponding to so-called "stabilized" driving.

3. A mechanical regulator system according to claim 2, **characterized by** the fact that it includes a circuit having two control loops for controlling a calculator (90) for controlling the torque $C_{ENG}$ of the engine, i.e. a first loop that takes the information $C_{WHEEL}$ from the outlet of said power transmission (9) and compares it with the value of Ref $C_{WHEEL}$ by means of a first comparator (97), and a second loop that takes the information $\omega_{ENG}$ at the outlet from a transfer function (92) placed downstream from said power transmission (9) and compares it with the value of Ref $\omega_{ENG}$ by means of a second comparator (96), each of the first and second comparators (97, 96) being connected via a respective corrector (901, 902) to a common switch (903), which switch is connected to the input of said calculator (90).

4. A mechanical regulator system according to claim 2, **characterized by** the fact that it includes a circuit comprising two loops that take the information $\omega_{ENG}$ from the outlet of a transfer function (92) placed downstream from said power transmission (9), i.e. a first loop adapted to compare said information with the value of Ref $\omega_{ENG}$ by means of a first comparator (920), and to deduce therefrom via a corrector (921), the value Ref C1 and to input it into said electrical regulation module (8), and a second loop adapted to send the information to a divider (98) that also receives as information the reference power value Ref $P_{ENG}$ demanded from the engine, in such a manner as to deliver a correct reference value Ref $C_{ENG}$ for the engine torque, and to send it to a calculator (90) for controlling the torque $C_{ENG}$ of the engine.

**5.** A mechanical regulator system according to any one of claims 1 to 4, **characterized by** the fact that said torque value of the engine (1) corresponding to so-called "stabilized" driving is defined by a torque/speed map of the engine (1).

**Patentansprüche**

**1.** System zur mechanischen Regelung einer Kraftübertragungsvorrichtung zwischen einerseits dem mit einem Schwungrad (11) ausgestatteten Verbrennungsmotor (1) und einem Paar elektrischer Maschinen (4a, 4b), mit denen ein Fahrzeug ausgestattet ist, und andererseits dessen Antriebsrädern (2), wobei der Verbrennungsmotor (1) mittels einer mechanischen Einheit (3) mit den beiden elektrischen Maschinen (4a, 4b) verbunden ist, wohingegen eine zwischen den beiden elektrischen Maschinen angeordnete Vorrichtung zur elektrischen Verbindung (6, 60a ; 61a-60b ; 61b, 5a-5b ; 50a-50b) eine direkte Leistungsübertragung von einer Maschine zur anderen sicherstellt, und dies ohne ein dazwischengeschaltetes Element zum umfangreichen Einspeichern und Ausspeichern von Energie, wobei diese Verbindungsvorrichtung (6, 60a ; 61a-60b ; 61b, 5a-5b ; 50a-50b) so gesteuert wird, daß die von der einen (4a; 4b) der beiden elektrischen Maschinen erzeugte Leistung unmittelbar von der anderen (4b; 4a) verbraucht wird und daß die beiden elektrischen Maschinen (4a, 4b) den Anforderungen des Antriebsstrangs ansprechen, wobei die Verbindung, die die Übertragung der elektrischen Energie zwischen den beiden elektrischen Maschinen sicherstellt, mittels zweier Wechselrichter (5a, 5b) ausgeführt ist, wobei jeder von ihnen mit einer elektrischen Maschine (4a, 4b) assoziiert ist, wobei diese beiden Wechselrichter an einen Bus (6) angeschlossen sind, dessen beide Leitungen durch einen Kondensator (62) verbunden sind, wobei eine als "elektrisches Regelungsmodul" bezeichnete Vorrichtung (8) dafür eingerichtet ist, jeder der elektrischen Maschinen (4a, 4b) gegebene Drehmomentwerte Ca bzw. Cb vorzugeben, **dadurch gekennzeichnet, daß**, wenn C1 bzw. C2 die Werte der effektiv am Ausgang des Verbrennungsmotors, hinter dem Schwungrad (11) und am Ausgang der mechanischen Einheit (3) auf der Seite der Antriebsräder (2), entwickelten Drehmomente sind, in das elektrische Regelungsmodul (8) die mit Ref. C1 bzw. Ref. C2 bezeichneten gewünschten Referenzwerte für jedes dieser Drehmomente als Sollwerte eingegeben werden, ab denen das elektrische Regelungsmodul die Drehmomente Ca und Cb regelt.

**2.** System zur mechanischen Regelung nach Anspruch 1, **dadurch gekennzeichnet, daß** es eine Steuerschaltung (8) und einen Kraftübertragungsstrang (9) umfaßt, die dafür eingerichtet sind, die Sollwerte Ref. C1 und Ref. C2 zu erzeugen, damit permanent die folgenden Bedingungen erfüllt sind: C1 $\leq$ Ref. C1 = $C_{STAB}$ und $C_{RAD}$ = C2 $\leq$ Ref. C2, wobei "$C_{RAD}$" der Drehmomentwert ist, der an der Radachse gemessen oder geschätzt wird, wohingegen "$C_{STAB}$" der Drehmomentwert des Verbrennungsmotors (1) ist, der einer sog. "stabilisierten" Steuerung entspricht.

**3.** System zur mechanischen Regelung nach Anspruch 2, **dadurch gekennzeichnet, daß** es eine Schaltung umfaßt, die zwei Regelschleifen eines Rechners (90) zur Steuerung des Drehmoments $C_{MTH}$ des Verbrennungsmotors umfaßt, und zwar eine erste Schleife, die die Information $C_{RAD}$ am Ausgang des Kraftübertragungsstrangs (9) erfaßt und sie mittels eines ersten Komparators (97) mit dem Wert von Ref $C_{RAD}$ vergleicht, und eine zweite Schleife, die die Information $\omega_{MTH}$ am Ausgang einer nach dem Kraftübertragungsstrang (9) angeordneten Übertragungsfunktion (92) erfaßt und sie mittels eines zweiten Komparators (96) mit dem Wert von Ref $\omega_{MTH}$ vergleicht, wobei dieser erste und zweite Komparator (97, 96) jeder über ein Korrekturglied (901 bzw. 902) mit ein und demselben Schalter (903) verbunden sind, der mit dem Eingang des Rechners (90) verbunden ist.

**4.** System zur mechanischen Regelung nach Anspruch 2, **dadurch gekennzeichnet, daß** es eine Schaltung umfaßt, die zwei Schleifen umfaßt, die die Information $\omega_{MTH}$ am Ausgang einer nach dem Kraftübertragungsstrang (9) angeordneten Übertragungsfunktion (92) erfassen, und zwar eine erste Schleife, die dafür eingerichtet ist, diese Information mittels eines ersten Komparators (920) mit dem Wert von Ref $\omega_{MTH}$ zu vergleichen, und um mittels eines Korrekturglieds (921) daraus den Wert Ref C1 abzuleiten und um diesen in das elektrische Regelungsmodul (8) einzugeben, und eine zweite Schleife, die dafür eingerichtet ist, die Information $\omega_{MTH}$ an einen Teiler (98) zu schicken, der als Information ebenfalls den Referenzwert der am Verbrennungsmotor angeforderten Leistung $P_{MTH}$ erhält, derart, daß ein korrekter Sollwert Ref $C_{MTH}$ für das Drehmoment des Verbrennungsmotors geliefert wird, und um diesen an einen Rechner (90) zur Steuerung des Drehmoments $C_{MTH}$ des Verbrennungsmotors zu schicken.

5. System zur mechanischen Regelung nach einem der Ansprüche 1 bis 4, **dadurch gekennzeichnet, daß** der Wert des Drehmoments des Verbrennungsmotors (1), der einer sog. "stabilisierten" Steuerung entspricht, durch eine Drehmoment/Geschwindigkeits-Karte des Verbrennungsmotors (1) definiert ist.

# FIG.1

## FIG.2

## FIG.3

## FIG.4

# FIG.5

EP 1 452 383 B1

## FIG.6

## FIG.7